# EUROPÄISCHE PATENTANMELDUNG

(11) **EP 2 016 993 A1**
(43) Veröffentlichungstag der Anmeldung: **21.01.2009**
(21) Anmeldenummer: 07013943.1
(22) Anmeldetag: 17.07.2007
(51) Int. Cl.: B01F 1/00, B01F 5/10, A01M 7/00

(54) **Vorrichtung zum Aufbereiten eines Pflanzenschutzmittels sowie ein Verfahren zum Betreiben der Vorrichtung**

(71) Anmelder: Bayer CropScience AG, 40789 Monheim (DE)
(72) Erfinder: Emmerson, Christopher David, 51381 Leverkusen (DE); Friessleben, Reinhard Dr., 65817 Eppstein (DE); West, Jeremy, Hale Altrincham Cheshire WA15 9AZ (GB)
(74) Vertreter: Müller-Gerbes Wagner Albiger Patentanwälte

(57) **Zusammenfassung**

Die Erfindung betrifft eine Vorrichtung (1) zum Aufbereiten eines Pflanzenschutzmittels zum Aufbringen auf Anbauflächen oder Pflanzen, umfassend einen Behälter (2) zur Aufnahme des Pflanzenschutzmittels, einen Tank (3) zur Aufnahme eines flüssigen Mediums sowie eine Transport- und Mischeinrichtung (4) zum Transportieren des Pflanzenschutzmittels aus dem Behälter (2) und zum Mischen des Pflanzenschutzmittels mit dem flüssigen Medium. Die erfindungsgemäße Vorrichtung (1) zeichnet sich dadurch aus, dass die Transport- und Mischeinrichtung (4) einen Mischer (9) mit einem Mischwerkzeug (11) umfasst, das im Tank (3) angeordnet ist und im Mischbetrieb einen Unterdruck erzeugt, durch den das Pflanzenschutzmittel aus dem Behälter (2) in den Tank (3) gesaugt wird. Zudem betrifft die Erfindung ein Verfahren zum Betreiben der Vorrichtung (1).

## Beschreibung

Die Erfindung betrifft eine Vorrichtung zum Aufbereiten eines Pflanzenschutzmittels zum Aufbringen auf Anbauflächen oder Pflanzen. Des Weiteren betrifft die Erfindung ein Verfahren zum Betreiben einer derartigen Vorrichtung.

Üblicherweise weist eine Vorrichtung zum Aufbereiten des Pflanzenschutzmittels einen Behälter zur Aufnahme des Pflanzenschutzmittels, einen Tank zur Aufnahme eines flüssigen Mediums sowie eine Transport- und Mischeinrichtung auf, die zum Transportieren des Pflanzenschutzmittels aus dem Behälter und zum Mischen des Pflanzenschutzmittels mit dem flüssigen Medium dient. Die Anlieferung des Pflanzenschutzmittels bei bekannten Vorrichtungen erfolgt dabei, soweit es sich um ein festes Pflanzenschutzmittel beispielsweise in Pulver- oder Granulatform handelt, in so genannten Big-Bags, für deren Handhabung und Entladung ein Kran von ca. 5 m Höhe erforderlich ist. Die Transport- und Mischeinrichtung umfasst dabei mehrere Transportschnecken, die das durch den Kran aus den Big-Bags entnommene Pflanzenschutzmittel in den Tank fördern, in dem das Pflanzenschutzmittel mit im Tank befindlichen Wasser oder mit einem Gemisch aus Wasser und Öl intensiv vermischt wird. Das Gemisch aus Pflanzenschutzmittel und Flüssigkeit kann dann in Sprühvorrichtungen gefüllt werden, die das Gemisch mit dem Pflanzenschutzmittel auf die zu behandelnden Anbauflächen oder Pflanzen aufbringen. Bei großen und für Landmaschinen nur schwer zu bearbeitenden Anbauflächen, wie sie beispielsweise auf Bananenplantagen gegeben sind, sind die Sprühvorrichtungen als Flugzeuge ausgebildet.

Pflanzenschutzmittel sind chemische oder biologische Wirkstoffe und Zubereitungen, die dafür bestimmt sind, Pflanzen und Pflanzenerzeugnisse vor Schadorganismen zu schützen oder ihrer Einwirkung vorzubeugen, oder unerwünschte Pflanzen oder Pflanzenteile zu vernichten und ein unerwünschtes Wachstum von Pflanzen zu hemmen oder einem solchen Wachstum vorzubeugen. Beispiele für Pflanzenschutzmittel sind Fungizide, Herbizide oder Insektizide. Der Umgang mit chemischen oder biologischen Wirkstoffen, insbesondere mit solchen aus dem Bereich des Pflanzenschutzes ist für den Menschen oftmals nicht unbedenklich. Aus gesundheitlichen Gründen ist es deshalb vorteilhaft bzw. aus arbeitsrechtlichen Gründen notwendig, dass vor allem das Bedienpersonal beim Ab- oder Umfüllen der Wirkstoffe, so wenig und in so geringen Dosen wie möglich mit den Wirkstoffen in Berührung kommt. Das gilt besonders dann, wenn beim Ab- oder Umfüllen fester Stoffe Stäube entstehen. So kann das Bedienpersonal, das die Vorrichtung zum Aufbereiten des Pflanzenschutzmittels betreibt, beim Entleeren der Big-Bags oder an anderen Stellen der Vorrichtung direkt mit dem Pflanzenschutzmittel in Kontakt kommen, so dass eine Exposition und somit eine mögliche gesundheitliche Schädigung nicht ausgeschlossen werden kann.

Sollen feste Pflanzenschutzmittel aufbereitet werden, bestehen weitere Nachteile der oben beschriebenen Vorrichtung darin, dass insbesondere die Transportschnecken verklumpen und dadurch die Vorrichtung nicht einsatzbereit ist. Des Weiteren ist es schwierig, pro Tankfüllung eine bestimmte und genau abgemessene Menge des Pflanzenschutzmittels einzubringen, um konstante Konzentrationen des Pflanzenschutzmittels im Tank zu erhalten.

Der Erfindung liegt daher die Aufgabe zugrunde, eine Vorrichtung zum Aufbereiten eines pulverförmigen oder granulatförmigen Pflanzenschutzmittels zum Versprühen bereitzustellen, die eine einfache und ungefährliche Handhabung des Pflanzenschutzmittels ermöglicht. Eine weitere Aufgabe der Erfindung besteht darin, ein Verfahren bereitzustellen, durch das sich die oben beschriebene Vorrichtung besonders vorteilhaft betreiben lässt.

Die der Erfindung zugrunde liegenden Aufgaben werden durch Anspruch 1 und durch Anspruch 10 gelöst. Bevorzugte Ausführungen können den übrigen Ansprüchen entnommen werden.

Die Vorrichtung gemäß Anspruch1 zeichnet sich dadurch aus, dass die Transport- und Mischeinrichtung einen Mischer mit einem Mischwerkzeug umfasst, das im Tank angeordnet ist und im Mischbetrieb einen Unterdruck erzeugt, durch den das Pflanzenschutzmittel aus dem Behälter in den Tank gesaugt wird. Der Unterdruck verhindert oder minimiert das Risiko, dass das Pflanzenschutzmittel durch undichte Stellen der Vorrichtung austritt und somit in Kontakt mit dem Bedienpersonal der Vorrichtung kommt. Zudem wird durch die Lage des Mischwerkzeugs im Tank sichergestellt, dass das angesaugte Pflanzenschutzmittel unterhalb eines Flüssigkeitsspiegels mit dem flüssigen Medium in Kontakt tritt und durch das Mischen unverzüglich an dieses gebunden wird, so dass auch aus dem Tank kein Pflanzenschutzmittel entweichen kann.

Die Aufbereitung fester, insbesondere pulver- oder granulatförmiger Pflanzenschutzmittel ist erfindungsgemäß bevorzugt. Auch eine Aufbereitung flüssiger oder halbfester Pflanzenschutzmittel ist möglich. Die Pflanzenschutzmittel können in einer für die beabsichtigte Anwendung geeigneten Formulierung vorliegen. Als Formulierungen kommen alle dem Fachmann bekannte und als geeignet betrachtete Pflanzenschutzformulierungen in Frage, wie beispielsweise DC-(dispergierbares Konzentrat), EC- (emulgierbares Konzentrat), EW- (Emulsion in Wasser), SE- (Suspoemulsion) SC- (lösliches Konzentrat), OD- (Öl-Dispersion), WG- (in Wasser dispergierbares Konzentrat) SG- (lösliches Granulat) oder CS- (verkapselte Lösung oder Suspension) Formulierungen.

Erfindungsgemäß wird unter Aufbringen das Behandeln der Anbaufläche, der Pflanzen und Pflanzenerzeugnisse mit Pflanzenschutzmitteln verstanden. Das Behandeln kann nach üblichen Behandlungsmethoden, beispielsweise durch (Ver-)Spritzen, (Ver-)Sprühen, Berieseln, Verdampfen, Zerstäuben, Vernebeln, Verschäumen, Gießen (drenchen), Tröpfchenbewässerung erfolgen.

In einem bevorzugten Ausführungsbeispiel ist der Mischer als ein Strahlmischer (Jetstream-Mixer) mit einem Hohlrotor als Mischerwerkzeug ausgebildet. Der Strahlmischer sorgt für eine besonders gute Vermischung des Pflanzenschutzmittels mit dem flüssigen Medium, wobei am Hohlrotor ein Unterdruck entsteht, durch den das Pflanzenschutzmittel angesaugt wird. Das Gemisch aus Pflanzenschutzmittel und flüssigem Medium, das beispielsweise Wasser oder ein Wasser-Öl-Gemisch sein kann, kann eine Dispersion sein, wenn sich das Pflanzenschutzmittel in dem flüssigen Medium nicht auflöst.

Der Hohlrotor kann durch eine Welle antreibbar sein, die in einem Startorrohr des Mischers drehbar angeordnet ist, wobei ein hohlzylindrischer Zwischenraum, der sich zwischen Welle und Startorrohr ergibt, als Ansaugkanal für das Pflanzenschutzmittel dient. Somit wird das Pflanzenschutzmittel axial dem Hohlrotor zugeführt, dringt dann durch diesen durch und wird nach Austritt aus dem Hohlrotor unverzüglich mit dem ebenfalls angesaugten flüssigen Medium intensiv vermischt.

Vorzugsweise ist eine Steuerungseinheit vorgesehen, durch die der Mischer automatisch betrieben werden kann. Die Steuerungseinheit kann dabei den Mischbetrieb des Mischers automatisch starten und/oder stoppen. Ist beispielsweise eine genügend große Menge an Pflanzenschutzmittel in den Tank gefördert worden, so kann der Mischer und somit die Zufuhr an Pflanzenschutzmittel mit dem Ergebnis gestoppt werden, dass das Pflanzenschutzmittel in gewünschter Konzentration im Tank vorliegt. Der Tank kann danach entleert werden und wieder neu mit dem flüssigen Medium befüllt werden, um einen neuen Mischvorgang oder Mischzyklus zu starten. Auch kann der Tank in eine Sprühvorrichtung eingesetzt und durch einen anderen Tank ersetzt werden.

Die Transport- und Mischeinrichtung kann eine Waage umfassen, durch die das Gewicht des aus dem Behälter gesaugten Pflanzenschutzmittels bestimmt werden kann. Das Gewicht des aus dem Behälter gesaugten Pflanzenschutzmittels kann als Sollwert oder Abbruchkriterium für die Steuerungseinheit dienen. Eine andere Möglichkeit besteht darin, dass durch die Waage das Gewicht des in den Tank gesaugten Pflanzenschutzmittels bestimmbar ist. Der Unterschied zu der ersten Variante, bei der das Gewicht des aus dem Behälter gesaugten Pflanzenschutzmittels bestimmt wird, besteht darin, dass mögliche Leckageverluste, die jedoch möglichst zu vermeiden sind, oder auch Rückstände an Pflanzenschutzmittel, die bei einem Mischvorgang zwischen Behälter und Tank verbleiben, zu gewissen Ungenauigkeiten führen können. Jedoch ist zu beachten, dass bei wiederkehrenden Mischvorgängen die Erfassung des Gewichts des aus dem Behälter gesaugten Pflanzenschutzmittels als Sollgröße oder Abbruchkriterium für die Steuerungseinheit hinreichend gute Ergebnisse hinsichtlich der einzuhaltenden Konzentration des Pflanzenschutzmittels liefert, da die Menge des am Anfang eines Mischvorgangs zwischen Behälter und Tank befindlichen Pflanzenschutzmittels in guter Näherung der Menge entspricht, die nach Beendigung des Mischvorgangs sich zwischen Behälter und Tank befindet.

Die Waage kann in einem Transportmittel integriert sein, das zum Austausch und/oder Transportieren des Behälters ausgelegt ist. Beispielsweise kann dieses Transportmittel ein Hubwagen sein, durch den man einen entleerten Behälter durch einen vollen Behälter austauschen kann. Der Hubwagen mit dem dann vollen Behälter muss lediglich an der Transport- und Mischeinrichtung angeschlossen werden und muss nicht auf eine gesonderte Waage gehoben werden.

Die Transport- und Mischvorrichtung kann eine Transportleitung umfassen, die einen Ausgang des Behälters mit einem Eingang des Mischers verbindet, wobei der Behälter vorzugsweise einen Schüttkegel aufweist, an dessen Spitze der Ausgang des Behälters angeordnet ist. Durch die Transportleitung liegt an dem Ausgang des Behälters, sieht man idealerweise von Strömungsverlusten oder sonstigen Verlusten einmal ab, der Unterdruck an, der durch das Mischwerkzeug erzeugt wird. Durch den Schüttkegel, der vorzugsweise nach unten gerichtet ist, wird das Pflanzenschutzmittel aufgrund seiner Schwerkraft zum Ausgang geleitet, von dem es aufgrund des anliegenden Unterdrucks durch die Transportleitung in den Tank gefördert wird. Der Öffnungswinkel des Schüttkegels kann dabei 45 bis 70° betragen und liegt vorzugsweise in einem Bereich zwischen 55 und 65°. Bei einem nach unten gerichteten Schüttkegel kann der Ausgang koaxial zum Schüttkegel ausgerichtet sein und ebenfalls nach unten gerichtet sein. Ein bevorzugtes Aufnahmevolumen beträgt 800 bis 1200 I. Somit kann der Behälter noch vergleichsweise leicht gehandhabt werden. Des Wieteren kann der Behälter ein Belüftungsventil aufweisen, durch das Luft strömt, die das im Behälter das Volumen des abgesaugten Pflanzenschutzmittels einnimmt.

In einem bevorzugten Ausführungsbeispiel weist die Transportleitung eine Zuleitung für ein gasförmiges Fluid auf, die zwischen dem Ausgang des Behälters und dem Eingang des Mischers angeordnet ist. Luft kann beispielsweise durch diese Zuleitung mit angesaugt werden, wodurch ein Transport des angesaugten Pflanzenschutzmittels durch die Transportleitung erst ermöglicht bzw. vereinfacht wird.

Das Verfahren gemäß Anspruch 10 zeichnet sich dadurch aus, dass bei Überschreiten eines vorbestimmten Sollwertes für das Gewicht des aus dem Behälter oder des in den Tank gesaugten Pflanzenschutzmittels die Steuerungseinheit den Mischer stoppt. Es handelt sich dabei um eine gravimetrische Steuerung, durch die sich hinsichtlich der Einhaltung der Konzentration des Pflanzenschutzmittels im Tank sehr gute Ergebnisse erzielen lassen.

In einem bevorzugten Ausführungsbeispiel wird der Mischer über eine Zeitfunktion abgestoppt. Dies bedeutet, dass der Mischer bei Erreichen eines bestimmten Wertes nicht abrupt gestoppt wird, sondern langsam in seiner Leistung runtergefahren wird. Dies kann beispielsweise durch eine lineare Rampe oder durch mehrere kleinere Schritte erfolgen. Durch dieses langsame Abstoppen wird verhindert, dass, bedingt durch dynamische Effekte, die bei einem abrupten Abstoppen auftreten können, Wasser oder das Gemisch aus Pflanzenschutzmittel und Wasser durch den hohlzylindrischen Zwischenraum in die Transportleitung schlägt und dort zu Verklumpungen führt.

Eine bevorzugte Ausführung des erfindungsgemäßen Verfahrens sieht vor, dass der Mischer nur dann gestartet wird, wenn das Gewicht des Pflanzenschutzmittels im Behälter einen gewissen Mindestwert überschreitet. Dies soll vermeiden, dass ein Mischvorgang gestartet wird, dieser aber nicht beendet werden kann, da die im Behälter befindliche Menge des Pflanzenschutzmittels nicht ausreicht, um die im Tank gewünschte Konzentration zu erhalten.

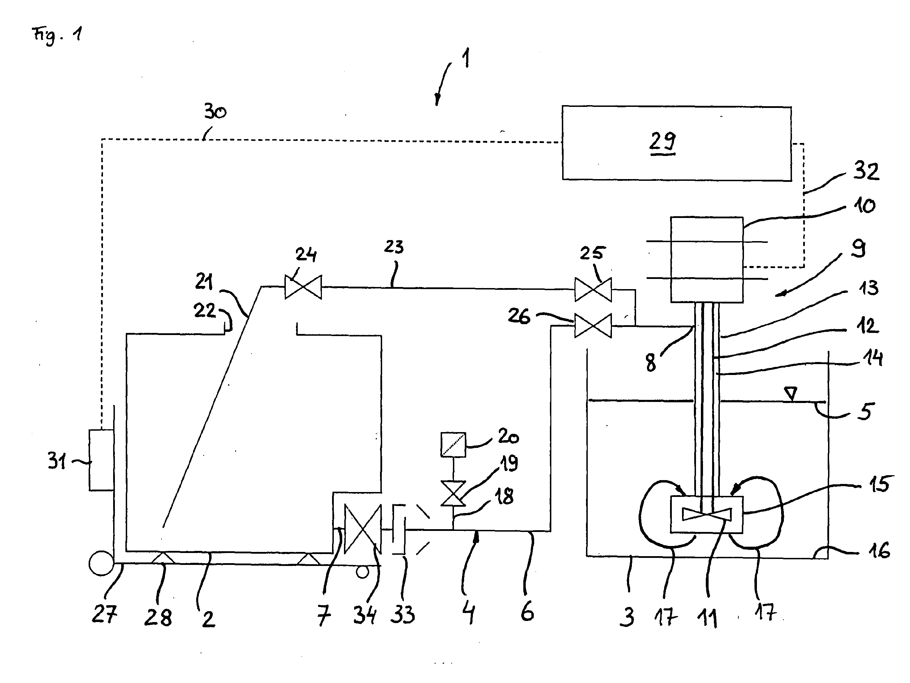

Anhand eines in Figur 1 gezeigten Ausführungsbeispiels soll die Erfindung näher erläutert werden.

Figur 1 zeigt in schematischer Weise eine erfindungsgemäße Vorrichtung zum Aufbereiten eines pulverförmigen oder granulatförmigen Pflanzenschutzmittels zum Versprühen auf Anbauflächen oder Pflanzen. Die Vorrichtung wird in ihrer Gesamtheit mit 1 bezeichnet. Beispielsweise kann es sich bei dem pulverförmigen oder granulatförmigen Pflanzenschutzmittel um ein Fungizid handeln, das gegen die verbreitete Pilzkrankheit namens "Schwarze Sigatoka" auf Bananenplantagen eingesetzt wird.

Die Vorrichtung 1 umfasst einen Behälter 2, der zur Aufnahme des pulverförmigen oder granulatförmigen Pflanzenschutzmittels dient. Des Weiteren umfasst die Vorrichtung 1 einen Tank 3, der mit Wasser oder mit einer vergleichbaren Flüssigkeit, beispielsweise mit einem Gemisch aus Wasser und Öl, gefüllt ist, sowie eine Transport- und Mischeinrichtung 4, die dazu dient, das im Behälter 2 befindliche Pflanzenschutzmittel in den Tank 3 zu befördern und dort mit dem darin befindlichen Wasser zu vermischen. Der Wasserstand des Wassers im Tank 3 wird durch die mit 5 gekennzeichnete Linie dargestellt.

Eine Transportleitung 6 der Transport- und Mischeinrichtung 4 verbindet einen bodenseitigen Ausgang 7 des Behälters 2 mit einem Eingang 8 eines Mischers 9. Durch die Transportleitung 6 kann das Pflanzenschutzmittel aus dem Behälter 2 zum Mischer 9 gelangen. Der Mischer 9 umfasst eine Antriebseinheit 10 und ein Mischwerkzeug in Form eines Hohlrotors 11, der über eine Welle 12 mit der Antriebseinheit 10 verbunden ist. Die Welle 12 ist in einem Statorrohr 13 drehbar gelagert, wobei der Innendurchmesser des Statorrohrs 13 größer ist als der Außendurchmesser der Welle 12. Dadurch ergibt sich zwischen Welle 12 und Statorrohr 13 ein holzylindrischer Zwischenraum 14, der als Ansaugkanal für das Pflanzenschutzmittel dient. Dieser Zwischenraum oder Ansaugkanal 14 steht über den Eingang 8 in Verbindung mit der Transportleitung 6.

Ein an dem Statorrohr 13 angebrachter Leitring 15 umgibt den Hohlrotor 11 rohrförmig. Der Leitring 15 lenkt die radialen Kräfte des Hohlrotors 11 in einen vertikalen zum Boden 16 des Tanks 3 wirkenden Strahl um. Vom Boden 16 wird der Strahl aufgenommen, umgelenkt zur Oberfläche (siehe Wasserstand 5) geleitet und durch den vertikalen Sog des Hohlrotors 11 erneut durch den Leitring 15 geführt. Die sich im Tank 3 einstellende Bewegung des Wassers soll durch die Pfeile 17 in schematischer Weise angezeigt werden und erfasst den gesamten Inhalt des Tanks 2. Der am Hohlrotor 11 entstehende Unterdruck, bewirkt durch die Zentrifugalkräfte und den Sog des vorbeiströmenden Mediums bzw. des vorbeiströmenden Wassers, saugt durch die Transportleitung 6 über den Eingang 8 und durch den Ansaugkanal 14 das Pflanzenschutzmittel aus dem Behälter 2. Damit sich das Pflanzenschutzmittel durch die Transportleitung 6 aufgrund des Unterdrucks in geeigneter Weise transportieren lässt, ist - in Strömungstechnik gesehen - hinter dem Ausgang 7 eine Zuleitung 18 vorgesehen, durch die Luft in die Transportleitung 6 gelangt. Der Zufluss der Luft durch die Zuleitung 18 lässt sich dabei über ein Ventil 19 einstellen. Ein dem Ventil 19 vorgeschalteter Luftfilter 20 dient zum Abscheiden von Schmutzteilchen in der Umgebungsluft.

Alternativ zur Transportleitung 6 kann das Pflanzenschutzmittel aus dem Behälter 2 über eine Lanze 21 abgesaugt werden, die von oben durch eine verschließbare Öffnung 22 des Behälters 2 in den Behälter 2 ragt. Über eine Lanzenleitung 23 und über zwischengeschaltete Ventilen 24, 25 ist die Lanze 21 mit dem Eingang 8 am Mischer 9 verbunden. Durch Betätigen der Ventile 24, 25 und durch Betätigen eines Ventils 26, das zwischen Transportleitung 6 und Eingang 8 geschaltet ist, lassen sich entweder die Transportleitung 6 oder die Lanzenleitung 23 aktivieren.

Der Behälter 2 ist auf einem Hubwagen 27 angeordnet, der eine Waage 28 umfasst. Durch die Waage 28 lässt sich das Gewicht des Behälters 2 und des darin befindlichen Pflanzenschutzmittels bestimmen.

Durch eine Steuerungseinheit 29 lässt sich der Mischer 9, insbesondere die Antriebseinheit 10 des Mischers 9, automatisch abstoppen. Dazu wird der Steuerungseinheit 29 über die Signalleitung 30 Daten über das Gewicht zugespielt, das die Waage 28 ermittelt. Eine entsprechende Aufbereitung der Daten zum Einlesen der Steuerungseinheit 29 erfolgt in einer Schnittstelle 31 der Waage 28. Die Schnittstelle 31 kann auch eine Anzeige umfassen, so dass man unmittelbar das von der Waage 28 ermittelte Gewicht ablesen kann. Eine Leitung 32 verbindet die Steuerungseinheit 29 mit der Antriebseinheit 10. Diese Leitung 32 kann beispielsweise eine Stromleitung sein, durch die ein von der Steuerungseinheit geregelter Strom fließt, soweit die Antriebseinheit einen Elektromotor umfasst. Soll der Elektromotor gestoppt werden, wird der Strom in der Stromleitung auf Null gesetzt. Die Leitung kann beispielsweise auch eine Signalleitung sein, mittels derer ein geeignetes Signals zur Steuerung der Antriebseinheit 10 geführt wird.

Die Vorrichtung 1 wird vorzugsweise in wiederkehrenden Zyklen betrieben, von denen ein Zyklus im Folgenden beschrieben wird. Am Anfang eines solchen Zyklus soll der Tank 3 vollständig entleert sein. So wird der Tank 3 zunächst mit Wasser gefüllt, bis dieses einen bestimmten Wasserstand 5 erreicht hat. Der Behälter 2 soll mit Pflanzenschutzmittel gefüllt sein, das für mehrere Zyklen ausreicht. Nun wird durch die Waage 28 das augenblickliche Gewicht des Behälters 2 mit dem darin befindlichen Pflanzenschutzmittel ermittelt. Über die Schnittstelle 31 und die Signalleitung 30 gelangt die Information über das augenblickliche Gewicht zur Steuerungseinheit 29. Die Steuerungseinheit 29 startet dann die Antriebseinheit 10, die über die Welle 12 den Hohlrotor 11 in Drehung versetzt. Dadurch bildet sich am Hohlrotor 11 ein Unterdruck aus, der über die Transportleitung 6, soweit das Ventil 26 geöffnet und das Ventil 25 geschlossen sind, Pflanzenschutzmittel aus dem Behälter 2 ansaugt. Dies führt dazu, dass das Gewicht des Behälters 2 mit dem darin befindlichen Pflanzenschutzmittel kontinuierlich abnimmt. Unterschreitet das durch die Waage 28 ermittelte Gewicht einen Grenzwert, der sich aus der Differenz des am Anfang des Zyklus gemessenen Gewichtes und einem vorbestimmten Differenzbetrag ermitteln lässt, stoppt die Steuerungseinheit 29 die Antriebseinheit 10 des Mischers 9. Dadurch fällt der Unterdruck am Hohlrotor 11 zusammen, so dass kein weiteres Pflanzenschutzmittel in den Tank 3 gelangt. Der oben erwähnte Differenzbetrag korrespondiert dabei mit dem Gewicht der Menge des Pflanzenschutzmittels, das in den Tank 3 in einem Zyklus eingefüllt werden soll, um eine entsprechende Konzentration des Pflanzenschutzmittels im Tank zu erreichen. Der Zyklus wird abgeschlossen, indem der Tank 3 entleert wird.

Der oben beschriebene Zyklus kann verschiedene Varianten oder Ausführungen aufweisen. Beispielsweise könnte ein gefüllter Tank 3 am Ende eines Zyklus, durch einen anderen Tank ausgetauscht werden, in dem lediglich nur das Wasser eingefüllt worden ist. Um den Tank 3 austauschen zu können, lässt sich vorzugsweise der Mischer 9 von der in der Figur 1 dargestellten Betriebsstellung in eine Austauschstellung bringen (beispielsweise durch Hochfahren entlang einer Führung parallel zur Welle 14), in der der Mischer 9 den Austausch nicht behindert. Auch kann das Abschalten des Mischers 9 durch die Steuerungseinheit 29 über eine Zeitrampe erfolgen, so dass die Drehzahl des Hohlrotors 11 langsam abnimmt, damit der Unterdruck nicht schlagartig zusammenfällt. Das schlagartige Zusammenfallen des Unterdrucks könnte in dem Ansaugstutzen 14 zu einem Druckstoß führen, durch den das im Tank 3 befindliche Wasser durch den Eingang 8 in die Transportleitung 6 gedrückt wird, was Verklumpungen in der Transport- und Mischeinrichtung 4 zur Folge haben kann.

Durch die wiederkehrenden Zyklen wird der Behälter 2 sukzessive entleert. Spätestens wenn der Behälter 2 vollständig entleert ist oder wenn die Menge des Pflanzenschutzmittels nicht mehr ausreicht, um im Rahmen eines vollständigen Zyklus den Behälter 3 mit dem Pflanzenschutzmittel zu beschicken, muss der Behälter 2 durch einen gefüllten Behälter ausgetauscht werden. Dazu ist ein Schnellverschluss 33 vorgesehen, durch den sich der Behälter 2 schnell und problemlos von der Transportleitung 6 trennen lässt. Bevor der Schnellverschluss 33 geöffnet wird, ist jedoch ein Ventil 34 zu schließen, das zwischen dem Ausgang 7 und dem Schnellverschluss 33 angeordnet ist. Es versteht sich, dass beim Austausch der Behälter 2 die Lanze 21 aus der Öffnung 22 gezogen werden muss.

### Bezugszeichenliste:

- 1: Vorrichtung
- 2: Behälter
- 3: Tank
- 4: Transport- und Mischeinrichtung
- 5: Wasserstand
- 6: Transportleitung
- 7: Ausgang
- 8: Eingang
- 9: Mischer
- 10: Antriebseinheit
- 11: Mischwerkzeug/Hohlrotor
- 12: Welle
- 13: Statorrohr
- 14: Zwischenraum
- 15: Leitring
- 16: Boden
- 17: Pfeil
- 18: Zuleitung
- 19: Ventil
- 20: Luftfilter
- 21: Lanze
- 22: Öffnung
- 23: Lanzenleitung
- 24: Ventil
- 25: Ventil
- 26: Ventil
- 27: Hubwagen
- 28: Waage
- 29: Steuerungseinheit
- 30: Signalleitung
- 31: Schnittstelle
- 32: Leitung
- 33: Schnellverschluss
- 34: Ventil

## Patentansprüche

1. Vorrichtung (1) zum Aufbereiten eines Pflanzenschutzmittels zum Aufbringen auf Anbauflächen oder Pflanzen, umfassend einen Behälter (2) zur Aufnahme des Pflanzenschutzmittels, einen Tank (3) zur Aufnahme eines flüssigen Mediums sowie eine Transport- und Mischeinrichtung (4) zum Transportieren des Pflanzenschutzmittels aus dem Behälter (2) und zum Mischen des Pflanzenschutzmittels mit dem flüssigen Medium, **dadurch gekennzeichnet, dass** die Transport- und Mischeinrichtung (4) einen Mischer (9) mit einem Mischwerkzeug (11) umfasst, das im Tank (3) angeordnet ist und im Mischbetrieb einen Unterdruck erzeugt, durch den das Pflanzenschutzmittel aus dem Behälter (2) in den Tank (3) gesaugt wird.

2. Vorrichtung (1) nach Anspruch 1, **dadurch gekennzeichnet, dass** der Mischer (9) als ein Strahlmischer mit einem Hohlrotor (11) als Mischerwerkzeug ausgebildet ist.

3. Vorrichtung (1) nach Anspruch 2, **dadurch gekennzeichnet, dass** der Hohlrotor (11) durch eine Welle (12) antreibbar ist, die in einem Statorrohr (13) drehbar angeordnet ist, wobei ein sich zwischen Welle (12) und Statorrohr (13) ergebener hohlzylindrischer Zwischenraum als Ansaugkanal (14) für das Pflanzenschutzmittel dient.

4. Vorrichtung (1) nach einem der Ansprüche 1 bis 3, **dadurch gekennzeichnet, dass** eine Steuerungseinheit (29) vorgesehen ist, durch die der Mischer (9) automatisch betreibbar ist.

5. Vorrichtung (1) nach einem der Ansprüche 1 bis 4, **dadurch gekennzeichnet, dass** die Transport- und Mischeinrichtung (4) eine Waage (28) umfasst, durch die das Gewicht des aus dem Behälter (2) oder des in den Tank (3) gesaugten Pflanzenschutzmittels bestimmbar ist.

6. Vorrichtung (1) nach Anspruch 5, **dadurch gekennzeichnet, dass** die Waage (28) in einem Transportmittel (27) integriert ist, das zum Austausch und/oder Transportieren des Behälters (2) ausgelegt ist.

7. Vorrichtung (1) nach einem der Ansprüche 1 bis 6, **dadurch gekennzeichnet, dass** die Transport- und Mischeinrichtung (4) eine Transportleitung (6) umfasst, die einen Ausgang (7) des Behälters (7) mit einem Eingang (8) des Mischers (9) verbindet.

8. Vorrichtung (1) nach Anspruch 7, **dadurch gekennzeichnet, dass** der Behälter (2) einen Schüttkegel aufweist, an dessen Spitze der Ausgang (7) des Behälters (2) angeordnet ist.

9. Vorrichtung (1) nach Anspruch 7 oder 8, **dadurch gekennzeichnet, dass** die Transportleitung (6) eine Zuleitung (18) für ein gasförmiges Fluid aufweist, die zwischen dem Ausgang (7) des Behälters (2) und Eingang (8) des Mischers (9) angeordnet ist.

10. Verfahren zum Betreiben der Vorrichtung (1) nach einem der Ansprüche 1 bis 9, **dadurch gekennzeichnet, dass** bei Überschreiten eines vorbestimmten Sollwertes für Gewicht des aus dem Behälter (2) oder des in den Tank (3) gesaugten Pflanzenschutzmittels die Steuerungseinheit (29) den Mischer (9) stoppt.

11. Verfahren nach Anspruch 10, **dadurch gekennzeichnet, dass** der Mischer (9) über eine Zeitfunktion abgestoppt wird.

12. Verfahren nach Anspruch 10 oder 11, **dadurch gekennzeichnet, dass** der Mischer (9) nur gestartet wird, wenn das Gewicht des Pflanzenschutzmittels im Behälter (2) einen Mindestwert überschreitet.
